# EUROPÄISCHE PATENTSCHRIFT

(11) **EP 3 726 954 B1**
(45) Veröffentlichungstag und Bekanntmachung des Hinweises auf die Patenterteilung: **15.05.2024**
(21) Anmeldenummer: 18816035.2
(22) Anmeldetag: 10.12.2018
(51) Int. Cl.: A01C 7/04, A01C 19/00, A01C 19/02

(54) **PNEUMATISCHE EINZELKORNSÄMASCHINE**
PNEUMATIC SINGLE-GRAIN SOWING MACHINE
SEMOIR MONOGRAINE PNEUMATIQUE

(30) Priorität: 20.12.2017 DE 102017130709
(43) Veröffentlichungstag der Anmeldung: 28.10.2020
(73) Patentinhaber: Amazonen-Werke H. Dreyer SE & Co. KG, 49205 Hasbergen (DE)
(72) Erfinder: BULMAHN, Simon, 26655 Westerstede (DE); WIEN, Thomas, 28816 Stuhr (DE)
(86) Internationale Anmeldenummer: PCT/EP2018/084101
(87) Internationale Veröffentlichungsnummer: WO 2019/121085

(56) Entgegenhaltungen:
- EP-A1- 2 923 543
- EP-A1- 2 923 544
- GB-A- 1 436 008
- US-A- 5 170 909

## Beschreibung

Die Erfindung betrifft eine pneumatische Einzelkornsämaschine gemäß dem Oberbegriff des Patentanspruches 1 und wie bekannt aus GB 1 436 008 A.

Eine pneumatische Einzelkornsämaschine ist ferner in EP 2 923 543 A1 beschrieben. Diese pneumatische Einzelkornsämaschine ist mit einer Mehrzahl von Vereinzelungseinrichtungen versehen. Eine Vereinzelungseinrichtung weist ein geschlossenes Gehäuse und an seinem oberen Ende einen Saatgutvorratsbehälter auf. Die Vereinzelungseinrichtung ist drehbar angetrieben in dem Gehäuse angeordnet und wird dazu genutzt, aus dem Saatgutvorratsbehälter gefördertes Saatgut vereinzelt einer Ausbringleitung zuzuführen. Hierzu ist die pneumatische Einzelkornsämaschine mit einem Gebläse versehen, wobei die Vereinzelungseinrichtung als geschlossene Hohltrommel ausgebildet ist und eine von zwei beabstandet zueinander angeordneten Seitenwänden kreisförmig angeordnete Perforationen aufweist. Das ansonsten geschlossene Gehäuse wird mit dem Gebläse verbunden und so mit einem Überdruck beaufschlagt, so dass sich eine Druckdifferenz zwischen dem Gehäuse und dem Innern der Vereinzelungseinrichtung bildet. Die Druckdifferenz sorgt dafür, dass idealerweise pro Perforation ein Saatkorn an der Seitenwand der Vereinzelungseinrichtung anhaftet. Das so vereinzelte Saatgut wird anschließend in eine Ausbringleitung abgegeben, indem die Druckdifferenz mittels eines Lochbedeckungselement kurzzeitig unterbrochen wird.

Das Gehäuse besteht im Wesentlichen aus zwei fest verbundenen Teilen. Ein erster Teil dient hierbei der Aufnahme der Antriebsmittel, zum außermittigen Antreiben der Vereinzelungseinrichtung über einen Zahnkranz, der Ausbringleitung und den Anschlüssen an den Saatgutvorratsbehälter und das Gebläse. Der zweite Teil dient der Lagerung der Vereinzelungseinrichtung. Nachteilig ist hierbei, dass, wenn das Gehäuse unter Druck gesetzt wird und sich das Gehäuse unter dem Druck geringfügig ausdehnt, die beiden Teile des Gehäuses sich gegeneinander verschieben. Dadurch, dass die Vereinzelungseinrichtung in dem einen Teil gelagert ist und ihr Antrieb und die Ausbringleitung in dem anderen Teil aufgenommen sind, entsteht eine nachteilige Verschiebung gegeneinander. Besonders nachteilig ist, dass sich der Abstand der die Perforationen aufweisenden Seitenwand zu der Ausbringleitung hierdurch verändert. Die Zufuhr des vereinzelten Saatguts in die Ausbringleitung verschlechtert sich dadurch, was wiederum Ursache für Fehl- bzw. Doppelstellen sein kann. Weiter nachteilig ist, dass sich durch die vorstehend beschriebene Verschiebung der Abstand der Vereinzelungseinrichtung zu ihrem Antrieb ändert. Zusammenfassend muss insbesondere die Vereinzelungseinrichtung mit engen Fertigungstoleranzen ausgeführt sein, damit der Effekt der Verschiebung sich nicht in weiter nachteiliger Weise vergrößert. Dies ist dadurch bedingt, dass keine Möglichkeit besteht, eine Verschiebung auszugleichen und eine geringfügige Ausdehnung nicht komplett verhindert werden kann.

Die Aufgabe der Erfindung besteht daher darin, eine Vereinzelungseinrichtung zu schaffen, die dazu eingerichtet ist, geringfügige Gehäuseausdehnungen auszugleichen.

Die Aufgabe wird erfindungsgemäß dadurch gelöst, dass durch zumindest eine dieser Seitenwände eine Antriebswelle geführt ist und die Hohltrommel mittels eines Dichtelementes gegen die Antriebswelle abgedichtet ist.

Ferner ist vorgesehen, dass die Hohltrommel durch eine Trennebene trennbar gestaltet ist, dass die Hohltrommel gebildet wird durch einen Drehteller und eine die Perforationen aufweisende Lochscheibe, dass die Trennebene zwischen dem Drehteller und der Lochscheibe liegt und im ungetrennten Zustand durch eine Dichtung abdichtet ist, und dass das vereinzelte Saatgut nach Unterbrechung der Druckdifferenz durch die Druckdifferenz in der Ausbringleitung beschleunigt wird.

Infolge dieser Maßnahme bleibt der Abstand zwischen der Lochscheibe und der Ausbringleitung zumindest annährend konstant, wobei die Gehäuseausdehnung im Wesentlichen durch die Trennebene der Hohltrommel ausgeglichen wird. In vorteilhafter Weise wird die Trennebene durch die Dichtung dicht gehalten, so dass die Vereinzelungseinrichtung in verbesserter Weise arbeitet. Weiter vorteilhaft ist, dass die Antriebswelle direkt in die Hohltrommel geführt ist. So kann der Zahnkranz an der Vereinzelungseinrichtung entfallen und das Gehäuse lässt sich kompakter gestalten.

In einer vorteilhaften Weiterbildung ist vorgesehen, dass das Gehäuse gebildet ist durch einen stationären Gehäuseteil und einen abnehmbaren Deckel, wobei der Drehteller mittels einer Lagerung im Deckel gelagert ist und die Antriebswelle mittels einer Lagerung im stationären Gehäuseteil gelagert ist, und dass die Antriebswelle durch die Lochscheibe geführt ist und die Lochscheibe so antreibbar ist. In einer besonders vorteilhaften Weiterbildung ist die Hohltrommel durch Abnahme des Deckels trennbar. Die so gestaltete Anordnung ist in vorteilhafter Weise dazu eingerichtet, eine Gehäuseausdehnung zu kompensieren, da die Komponenten, die zum Ausgleich einer Verschiebung geeignet sind, an den Gehäuseteilen angeordnet sind zwischen denen die Verschiebung entsteht. Weiter vorteilhaft ist, dass in der Hohltrommel angeordnete Komponenten in besonders zweckmäßiger Weise zugänglich sind, indem der Deckel der Vereinzelungseinrichtung abgenommen wird. Dies ist besonders zuträglich zur schnellen und einfachen Durchführung von Wartungsarbeiten. Des Weiteren ist positiv, dass das Gehäuse der Vereinzelungseinrichtung geöffnet werden kann während es zumindest teilweise mit Saatgut gefüllt ist. Durch die Anordnung der Lochscheibe im stationären Teil des Gehäuses wird das zu vereinzelnde Saatgut durch die Lochscheibe im stationären Teil zurückgehalten und das Gehäuse muss nicht zwingend geleert werden bevor es geöffnet wird.

Erfindungsgemäß ist der Abstand der Lochscheibe zum stationären Gehäuseteil einstellbar. Diese Maßnahme zeichnet sich dadurch aus, dass die Lochscheibe sich nahezu nicht relativ zu der Ausbringleitung bewegt, sondern unter anderem dieser Abstand gleichermaßen einstellbar ist. Infolge dieser Maßnahme wird die Zufuhr des vereinzelten Saatgutes von der Vereinzelungseinrichtung zur Ausbringleitung verbessert. Diese Weiterbildung sieht vor, dass der Abstand zwischen 0 und 6 mm, vorzugsweise zwischen 0 und 4 mm, besonders vorzugsweise zwischen 0 und 2 mm, einstellbar ist. In weiter vorteilhafter Weise lassen sich durch diese Einstellung die Fertigungstoleranzen der verknüpften Komponenten ausgleichen.

Um den Drehteller synchron mit der Lochscheibe anzutreiben, so dass in der durch die Dichtung abgedichteten Trennebene keine zusätzliche Reibung entsteht, ist vorgesehen, dass die Dichtung an dem Drehteller angeordnet ist, dass die Dichtung eine reibschlüssige Kupplung zwischen dem Drehteller und der Lochscheibe bildet. In vorteilhafter Weise wird bei dieser Weiterbildung die entstehende Reibung auf die Lagerung der bewegten Komponenten beschränkt. Hierdurch bedingt, ist zum Antrieb der Hohltrommel ein besonders niedriges Antriebsmoment notwendig.

In einer weiteren besonders vorteilhaften Weiterbildung ist vorgesehen, dass die Dichtung dazu eingerichtet ist in axialer Richtung der Drehtrommel einen Abstand zwischen Drehtrommel und Lochscheibe abzudichten. Dieser Abstand kann 0 bis 50 mm, vorzugsweise 0 bis 40 mm, besonders vorzugsweise 0 bis 30 mm, betragen. Durch die so geartete Dichtung können Verschiebungen, durch beispielsweise Gehäuseausdehnung, und weitere Fertigungstoleranzen besonders einfach und zweckmäßig ausgeglichen werden. Außerdem muss die Montage des Drehtellers im Deckel nicht auf die der mit selbigem zusammenwirkenden Lochscheibe im stationären Gehäuseteil abgestimmt werden. Dies erleichtert die Montage und vereinfacht die Anordnung der beiden Komponenten zueinander.

In einer ebenfalls vorteilhaften Weiterbildung der pneumatischen Einzelkornsämaschine ist vorgesehen, dass das Gehäuse einen Antrieb umfasst, der dazu eingerichtet ist die Antriebswelle anzutreiben, wobei der Antrieb elektrisch oder mechanisch ausgebildet ist, und der elektrische Antrieb und der mechanischen Antrieb gegeneinander austauschbar sind. Infolge dieser Maßnahme ist das Gehäuse der Vereinzelungseinrichtung ohne aufwendige Änderungen dazu geeignet die für den Anwendungsfall angemessene Antriebsform zu nutzen. Die Vereinzelungseinrichtung wird so in zweckmäßiger Weise hinsichtlich ihres Antriebes verbessert.

In einer zusätzlichen Weiterbildung, in der die pneumatische Einzelkornmaschine ein um ihre eigene Mittelachse drehendes Lochbedeckungselement umfasst, wobei dieses Lochbedeckungselement auf den Perforationen der Lochscheibe abrollt, ist vorgesehen, dass das Lochbedeckungselement ortsfest, drehbar von einem mit dem Deckel starr verbundenen Tragarm getragen wird, dass die Mittelachse des Lochbedeckungselementes einen Winkel von mehr als 5 Grad mit der Lochscheibe einschließt. Infolge dieser Maßnahme lässt sich das Lochbedeckungselement in besonders einfacher Art und Weise montieren und/oder bspw. zu Instandhaltungszwecken austauschen, indem der abnehmbare Deckel geöffnet wird. Weiter vorteilhaft ist, dass durch die Anordnung unter einem Winkel von mehr als 5 Grad die unterschiedlichen Bahngeschwindigkeiten beim Abrollen auf der Lochscheibe besonders erfolgreich ausgeglichen werden können. Dies reduziert die Abnutzung des Lochbedeckungselementes und trägt so zu einer längeren Lebensdauer der Vereinzelungseinrichtung insgesamt bei.

Weitere Einzelheiten der Erfindung sind der Beispielsbeschreibung und den Zeichnungen zu entnehmen. Die Zeichnungen zeigen
- Fig.1: eine erste Ausführungsform eines erfindungsgemäßen Gehäuses einer Vereinzelungseinrichtung mit mechanischem Antrieb in perspektivischer Ansicht,
- Fig.2: das Gehäuse gemäß Fig. 1 in Schnittansicht,
- Fig.3: eine zweite Ausführungsform eines Gehäuses mit elektrischem Antrieb in perspektivischer Ansicht und
- Fig.4: das Gehäuse gemäß Fig.3 in Schnittansicht.

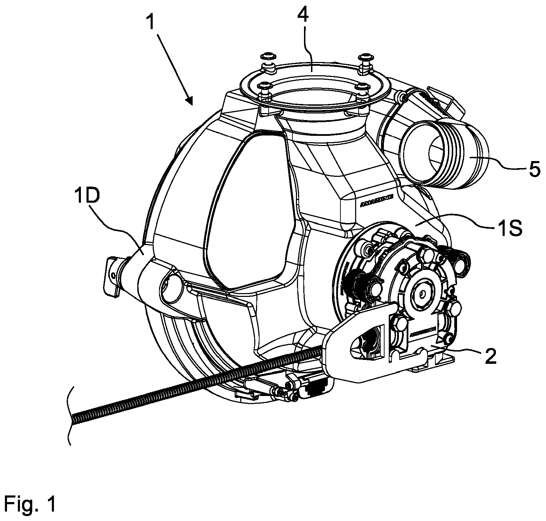

Eine erste Ausführungsform eines geschlossenen Gehäuses 1 ist in Fig. 1 gezeigt. Das Gehäuse 1 ist durch einen stationären Gehäuseteil 1S und einen abnehmbaren Deckel 1D gebildet und ist an seiner Vorderseite mit einem mechanischen Antrieb 2 versehen. Eine in dem Gehäuse 1 angeordnete Vereinzelungseinrichtung 3 wird von dem mechanischen Antrieb 2 drehend angetrieben und so zur Vereinzelung von Saatgut genutzt. Die Vereinzelungseinrichtung 3 wird gebildet durch einen Drehteller 6 und eine kreisförmig angeordnete Perforationen 7A aufweisende Lochscheibe 7 und ist so als zwei beabstandet angeordnete Seitenwände aufweisende Hohltrommel ausgebildet. Eine nicht gezeigte, pneumatische Einzelkornsämaschine ist mit einer Mehrzahl solcher Gehäuse 1 ausgerüstet, nämlich mit zumindest einem Gehäuse 1 pro Reihe.

Das zu vereinzelnde Saatgut wird dem Gehäuse 1 über den Saatgutzulauf 4 aus einem nicht dargestellten Saatgutvorratsbehälter zugeführt. Das Gehäuse umfasst des Weiteren einen Luftstutzen 5 am stationären Gehäuseteil 1S zum Anschluss eines ebenfalls nicht dargestellten Gebläses und lässt sich so mit einer Druckdifferenz beaufschlagen. Dadurch, dass die Vereinzelungseinrichtung 3 als geschlossene Hohltrommel ausgeführt ist und der Innenraum der Vereinzelungseinrichtung 3 über eine Gehäuseöffnung 1A im Deckel 1D in Verbindung zur Atmosphäre steht, fällt die Druckdifferenz über die Lochscheibe 7, genauer an den kreisförmig angeordneten Perforationen 7A, ab. Dementsprechend wird die Druckdifferenz dafür genutzt, dass sich das zu vereinzelnde Saatgut an den Perforationen 7A der Lochscheibe 7 anlagert und so vereinzelt wird. Um das Saatgut von der Lochscheibe 7 abzulösen und einer Ausbringleitung 8 zuzuführen, ist im Innern der Vereinzelungseinrichtung 3 ein Lochbedeckungselement 11 angeordnet. Die Lochbedeckungselement 11 dreht sich um seine eigene Mittelachse und rollt so auf den Perforationen 7A der Lochscheibe 7 ab. Auf diese Weise wird die Druckdifferenz einmal pro Umdrehung der Lochscheibe 7 unterbrochen, was dazu führt, dass das Saatgut abgelöst und in der Ausbringleitung 8 durch die vom Gebläse erzeugte Druckdifferenz beschleunigt wird.

Das Lochbedeckungselement 11 ist an einem Tragarm 12 angeordnet, der starr mit dem Deckel 1D verbunden ist. Da das Lochbedeckungselement 11 so ausgeformt ist, dass es mit seiner gesamten Mantelfläche auf der Lochscheibe 7 abrollt, treten über die Höhe des Lochbedeckungselementes 11 verschiedene Bahngeschwindigkeiten auf, die im Verhältnis zum Abrollradius auf der Lochscheibe 7 stehen. Um diese unterschiedlichen Geschwindigkeiten auszugleichen und so einem erhöhten Verschleiß des Lochbedeckungselementes 11 vorzubeugen, ist das Lochbedeckungselement 11 unter einem Winkel zur Lochscheibe 7 angeordnet. Die Mittelachse des Lochbedeckungselementes 11 schließt einen Winkel von mehr als 5 Grad mit der Lochscheibe 7 ein, damit die Bahngeschwindigkeiten in optimaler Weise abgestimmt werden können.

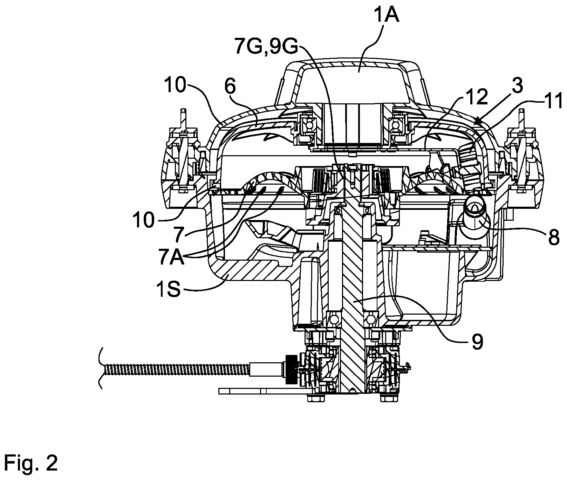

Um die Vereinzelungseinrichtung 3 anzutreiben, ist eine Antriebswelle 9 von dem mechanischen Antrieb 2 in das Gehäuse 1 geführt, wie Fig. 2 zeigt. Die Antriebswelle ist im stationären Gehäuseteil 1S gelagert und an ihrem vorderen Ende durchdringt die Antriebswelle 9 die Lochscheibe 7. Die Lochscheibe 7 ist mit Hilfe einer Schraubverbindung mit der Antriebswelle 9 verbunden und wird mittels eines Dichtelementes gegen die Antriebswelle 9 abgedichtet. Somit ist die Vereinzelungseinrichtung 3 ohne negative Beeinflussung der Druckdifferenz zwischen Gehäuse 1 und dem Innern der Vereinzelungseinrichtung 3 antreibbar.

Weiter ist die Vereinzelungseinrichtung 3 zwischen dem Drehteller 6 und der Lochscheibe 7 durch eine Trennebene, die im Wesentlichen senkrecht zu der Antriebswelle 9 liegt, trennbar gestaltet. Im nicht getrennten Zustand der Vereinzelungseinrichtung 3, wie er in Fig. 2 gezeigt ist, ist die Trennebene durch eine an dem Drehteller 6 umlaufende Dichtung 10 luftdicht geschlossen. Die Dichtung 10 ist zu diesem Zweck aus einem elastischen Dichtmaterial gefertigt und erstreckt sich von dem Drehteller 6, der mittels einer Lagerung im Deckel 1D angeordnet ist, in Richtung der Lochscheibe 7 mit ausreichendem Übermaß, so dass die Dichtung 10 sich an die Lochscheibe 7 anlegt. Zum einen wird so bewirkt, dass die Vereinzelungseinrichtung 3 abgedichtet ist und zum anderen fungiert die Dichtung 10 so ebenfalls als reibschlüssige Kupplung zwischen dem Drehteller 6 und der Lochscheibe 7. In einfacher Weise wird die Drehbewegung der durch den mechanischen Antrieb 2 mit seiner Antriebswelle 9 angetriebenen Lochscheibe 7 auf den Drehteller 6 übertragen. Die Vereinzelungseinrichtung 3 lässt sich in einfacher Weise trennen indem der Deckel 1D des Gehäuses 1 abgenommen wird.

Durch das vorstehend beschriebene, ausreichend große Übermaß der Dichtung 10 in axialer Richtung der Vereinzelungseinrichtung 3, ist die Dichtung 10 dazu eingerichtet, einen Abstand von bis zu 50 mm zwischen dem Drehteller 6 und der Lochscheibe 7 abzudichten. Vorzugsweise ist die Dichtung 10 zumindest dazu eingerichtet, einen Abstand von 0 bis 40 mm, besonders vorzugsweise von 0 bis 30 mm in axialer Richtung der Vereinzelungseinrichtung 3 zwischen dem Drehteller 6 und der Lochscheibe 7 abzudichten.

Da die Dichtung 10 dazu eingerichtet ist, Abstände auszugleichen, ist das Risiko minimiert, dass sich Fertigungstoleranzen von dem im Deckel 1D angeordneten Drehteller 6 und der im stationären Gehäuseteil 1S angeordneten Lochscheibe 7 bzw. Antriebswelle 9 in negativer Weise summieren.

Eine weitere Möglichkeit zum Ausgleich von Fertigungstoleranzen, montagebedingtem Spielraum und weiteren Abständen ist dadurch geschaffen, dass der Abstand der Lochscheibe 7 zum stationären Gehäuseteil 1S einstellbar ist. Außerdem kann so gleichzeitig der Abstand zwischen Lochscheibe 7 und der Ausbringleitung 8 eingestellt werden, um die Zuführung des vereinzelten Saatgutes zu verbessern. Hierzu ist die Antriebswelle 9 an ihrem vorderen Ende mit einem Außengewinde 9G ausgeführt. Das Außengewinde 9G korrespondiert mit einem Innengewinde 7G in der Lochscheibe 7, so dass die Lochscheibe 7 in axialer Richtung auf der Antriebswelle 9 über die Länge des Gewindes 9G variabel angeordnet ist und somit der Abstand zum stationären Gehäuseteil 1S einstellbar ist. Damit die Lochscheibe 7 sich bei Antrieb der Antriebswelle 9 nicht verdreht, ist das vordere Ende der Antriebswelle 9 des Weiteren mit einer Verdrehsicherung versehen. Die Verdrehsicherung umfasst eine längliche Ausnahme in der Antriebswelle 9, Ausnahmen in der Lochscheibe 7 und ein zusammenwirkendes Sicherungselement. Das Sicherungselement ist durch eine Schraube und die längliche Ausnahme an der Antriebswelle 9 fixiert und verhindert eine Drehbewegung der Lochscheibe 7 durch Eingriff in eine der Ausnahmen in selbiger. Folglich muss die Verdrehsicherung zum Einstellen des Abstandes der Lochscheibe 7 zum stationären Teil des Gehäuses 1S gelöst werden.

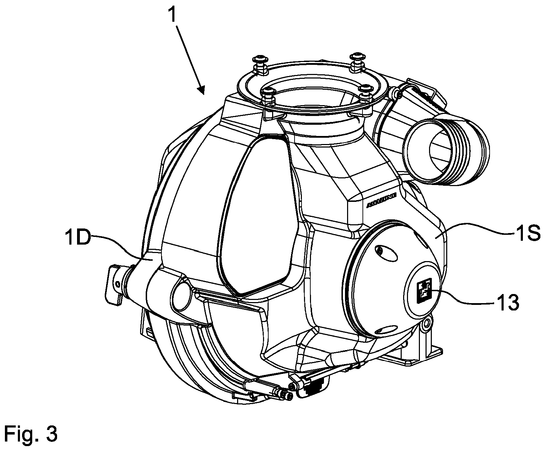

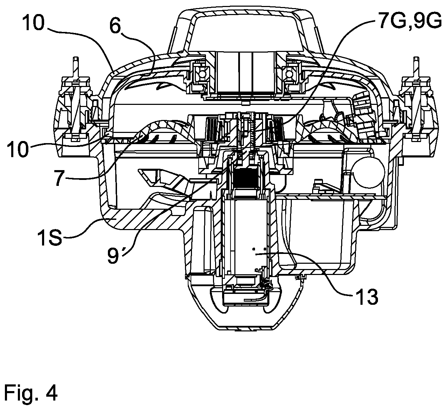

Eine zweite Ausführungsform der Erfindung ist in Fig. 3 und 4 zu sehen. In dieser Ausführungsform umfasst das Gehäuse 1 einen elektrischen Antrieb 13. Das Gehäuse 1 ist ansonsten identisch ausgeführt, wie zuvor beschrieben in der Ausführungsform mit dem mechanischen Antrieb 2. Der mechanische Antrieb 2 ist folglich gegen den elektrischen Antrieb 13 austauschbar, ohne Änderungen am Gehäuse 1 vorzunehmen. Wie in Fig. 4 zu sehen ist, umfasst auch die Antriebswelle 9' des elektrischen Antriebs 13 in der zweiten Ausführungsform an ihrem vorderen Ende ein Außengewinde 9G und entsprechende Mittel zur Sicherung der Lochscheibe 7 gegen Verdrehen. In dieser Ausführungsform ist die Lochscheibe 7 ebenfalls im stationären Gehäuseteil 1S über die Antriebswelle 9' gelagert. Der elektrische Antrieb 13 wird anstelle der Antriebswelle 9 des mechanischen Antriebs 2 in das Gehäuse 1 eingesetzt und über nicht weiter dargestellte Kabel mit einer elektrischen Energiequelle verbunden.

Zusammenfassend verfügen beide vorstehend beschriebenen Ausführungsformen der Erfindung über verschiedene Mittel zum Ausgleich des sich unter Druck geringfügig ausdehnenden Gehäuses 1.

### Bezugszeichenliste

- 1: Gehäuse
- 1S: stationärer Gehäuseteil
- 1D: abnehmbarer Deckel
- 1A: Gehäuseöffnung
- 2: mechanischer Antrieb
- 3: Vereinzelungseinrichtung
- 4: Saatgutzulauf
- 5: Luftstutzen
- 6: Drehteller
- 7: Lochscheibe
- 7A: Perforation
- 7G: Innengewinde
- 8: Ausbringleitung
- 9, 9': Antriebswelle
- 9G: Außengewinde
- 10: Dichtung
- 11: Lochbedeckungselement
- 12: Tragarm

## Patentansprüche

1. Pneumatische Einzelkornsämaschine mit einem zumindest einen Saatgutvorratsbehälter aufweisenden, geschlossenen Gehäuse (1) und zumindest einer drehbar angetriebenen Vereinzelungseinrichtung (3), die kreisförmig angeordnete Perforationen (7A) aufweist, einem Gebläse, mittels welchem eine Druckdifferenz zwischen dem Gehäuse (1) und dem Innern der Vereinzelungseinrichtung (3) erzeugbar ist, so dass die Vereinzelungseinrichtung (3) mit Hilfe der Druckdifferenz mittels der Perforationen (7A) dazu eingerichtet ist Saatgut zu vereinzeln, wobei das vereinzelte Saatgut durch die Unterbrechung der Druckdifferenz mittels eines Lochbedeckungselementes (11) von der Perforation (7A) ablösbar ist, so dass das abgelöste, vereinzelte Saatgut einer Ausbringleitung (8) zugeführt wird, wobei die Vereinzelungseinrichtung (3) als zwei zueinander beabstandet angeordnete Seitenwände aufweisende geschlossene Hohltrommel ausgebildet ist, wobei in zumindest einer dieser Seitenwände die Perforationen (7A) angeordnet sind, wobei die Hohltrommel durch eine Trennebene trennbar gestaltet ist, die Hohltrommel gebildet wird durch einen Drehteller (6) und eine die Perforationen (7A) aufweisende Lochscheibe (7), die Trennebene zwischen dem Drehteller (6) und der Lochscheibe (7) liegt und im ungetrennten Zustand durch eine Dichtung (10) abdichtet ist, und wobei das vereinzelte Saatgut nach Unterbrechung der Druckdifferenz durch die Druckdifferenz in der Ausbringleitung (8) beschleunigt wird, wobei durch zumindest eine der Seitenwände eine Antriebswelle geführt ist, **dadurch gekennzeichnet, dass** die Hohltrommel mittels eines Dichtelementes gegen die Antriebswelle (9, 9') abgedichtet ist, und dass der Abstand der Lochscheibe (7) zum stationären Gehäuseteil (1 S) über eine Gewindeverbindung zwischen der Antriebswelle und der Seitenwand einstellbar ist.

2. Pneumatische Einzelkornsämaschine nach Anspruch 1, wobei das Gehäuse (1) gebildet ist durch einen stationären Gehäuseteil (1S) und einen abnehmbaren Deckel (1D), wobei der Drehteller (6) mittels einer Lagerung im Deckel (1D) gelagert ist, wobei die Antriebswelle (9, 9') mittels einer Lagerung im stationären Gehäuseteil (1S) gelagert ist, und wobei die Antriebswelle (9, 9') durch die Lochscheibe (7) geführt ist und die Lochscheibe (7) so antreibbar ist.

3. Pneumatische Einzelkornsämaschine nach zumindest einem der vorstehenden Ansprüche, wobei die Hohltrommel durch Abnahme des Deckels (1D) trennbar ist.

4. Pneumatische Einzelkornsämaschine nach zumindest einem der vorstehenden Ansprüche, wobei die Dichtung (10) an dem Drehteller (6) angeordnet ist, und wobei die Dichtung (10) eine reibschlüssige Kupplung zwischen dem Drehteller (6) und der Lochscheibe (7) bildet.

5. Pneumatische Einzelkornsämaschine nach zumindest einem der vorstehenden Ansprüche, wobei die Dichtung (10) dazu eingerichtet ist in axialer Richtung der Hohltrommel einen Abstand zwischen Drehteller (6) und Lochscheibe (7) abzudichten.

6. Pneumatische Einzelkornsämaschine nach zumindest einem der vorstehenden Ansprüche, wobei das Gehäuse (1) einen Antrieb umfasst der dazu eingerichtet ist die Antriebswelle (9, 9') anzutreiben, wobei der Antrieb (2, 13) elektrisch oder mechanisch ausgebildet ist, und wobei der elektrische Antrieb (13) und der mechanische Antrieb (2) gegeneinander austauschbar sind.

7. Pneumatische Einzelkornsämaschine nach zumindest einem der vorstehenden Ansprüche, wobei das Lochbedeckungselement (11) um seine eigene Mittelachse drehend auf den Perforationen (7A) der Lochscheibe (7) abrollt, wobei das Lochbedeckungselement (11) ortsfest, drehbar von einem mit dem Deckel (1D) starr verbundenen Tragarm (12) getragen wird, und wobei die Mittelachse des Lochbedeckungselementes (11) einen Winkel von mehr als 5 Grad mit der Lochscheibe (7) einschließt.

## Claims

1. Pneumatic single-grain seed drill comprising a closed housing (1) having at least one seed storage container, and at least one rotatably driven separating device (3) having perforations (7A) arranged in a circular manner, and a fan, by means of which a pressure difference can be generated between the housing (1) and the interior of the separating device (3) such that the separating device (3) is designed to separate seeds with the aid of the pressure difference by means of the perforations (7A), the separated seeds being detachable from the perforation (7A) by interruption of the pressure difference by means of a hole-covering element (11) such that the detached, separated seeds are supplied to a discharge line (8), the separating device (3) being designed as a closed hollow drum having two lateral walls which are spaced apart from one another, the perforations (7A) being arranged in at least one of said lateral walls, the hollow drum being separable by a separating plane, the hollow drum being formed by a rotary plate (6) and a perforated disk (7) having the perforations (7A), the separating plane being located between the rotary plate (6) and the perforated disk (7) and being sealed by means of a seal (10) in the non-separated state, and the separated seeds being accelerated by the pressure difference into the discharge line (8) after interruption of the pressure difference, with a drive shaft being guided through at least one of the lateral walls, **characterized in that** the hollow drum is sealed off from the drive shaft (9, 9') by means of a sealing element, and **in that** the distance of the perforated disk (7) from the stationary housing part (1 S) can be adjusted by means of a threaded connection between the drive shaft and the lateral wall.

2. Pneumatic single-grain seed drill according to claim 1, wherein the housing (1) is formed by a stationary housing part (1S) and a removable lid (1D), wherein the rotary plate (6) is mounted in the lid (1D) by means of a bearing, wherein the drive shaft (9, 9') is mounted in the stationary housing part (1S) by means of a bearing, and wherein the drive shaft (9, 9') is guided through the perforated disk (7) and the perforated disk (7) is thus drivable.

3. Pneumatic single-grain seed drill according to at least one of the preceding claims, wherein the hollow drum can be separated by removing the lid (1D).

4. Pneumatic single-grain seed drill according to at least one of the preceding claims, wherein the seal (10) is arranged on the rotary plate (6), and wherein the seal (10) forms a frictional coupling between the rotary plate (6) and the perforated disk (7).

5. Pneumatic single-grain seed drill according to at least one of the preceding claims, wherein the seal (10) is designed to seal a spacing between the rotary plate (6) and the perforated disk (7) in the axial direction of the hollow drum.

6. Pneumatic single-grain seed drill according to at least one of the preceding claims, wherein the housing (1) comprises a drive which is designed to drive the drive shaft (9, 9'), wherein the drive (2, 13) is electrical or mechanical, and wherein the electric drive (13) and the mechanical drive (2) are mutually exchangeable.

7. Pneumatic single-grain seed drill according to at least one of the preceding claims, wherein the hole-covering element (11) rolls, in a manner rotating about its own central axis, on the perforations (7A) of the perforated disk (7), wherein the hole-covering element (11) is supported in a stationary, rotatable manner by a support arm (12) rigidly connected to the lid (1D), and wherein the central axis of the hole-covering element (11) encloses an angle of more than 5 degrees with the perforated disk (7).

## Revendications

1. Semeuse pneumatique de grains individuels comportant un boîtier (1) fermé présentant au moins un réservoir à graines et au moins un dispositif séparateur (3) entraîné en rotation, qui présente des perforations (7A) disposées en cercle, un ventilateur, au moyen duquel une différence de pression peut être générée entre le boîtier (1) et l'intérieur du dispositif séparateur (3), de telle sorte que le dispositif séparateur (3) est conçu pour séparer les graines à l'aide de la différence de pression au moyen des perforations (7A), les graines séparées pouvant être détachées de la perforation (7A) par interruption de la différence de pression au moyen d'un élément (11) de recouvrement de trous, de telle sorte que les graines séparées, détachées sont introduites dans une conduite d'épandage (8), le dispositif séparateur (3) étant réalisé sous forme d'un tambour creux fermé présentant deux parois latérales disposées à une certaine distance l'une de l'autre, les perforations (7A) étant disposées dans au moins l'une de ces parois latérales, le tambour creux étant arrangé de manière séparable à travers un plan de séparation, le tambour creux étant formé par une assiette rotative (6) et un disque perforé (7) présentant les perforations (7A), le plan de séparation étant situé entre l'assiette rotative (6) et le disque perforé (7) et étant fermé hermétiquement dans l'état non séparé par un joint d'étanchéité (10) et les graines séparées étant accélérées, après l'interruption de la différence de pression, par la différence de pression dans la conduite d'épandage (8), un arbre d'entraînement étant guidé à travers au moins l'une des parois latérales, **caractérisée en ce que** le tambour creux est fermé hermétiquement au moyen d'un élément d'étanchéité contre l'arbre d'entraînement (9, 9') et **en ce que** la distance du disque perforé (7) par rapport à la partie (1S) stationnaire du boîtier peut être réglée par l'intermédiaire d'une liaison filetée entre l'arbre d'entraînement et la paroi latérale.

2. Semeuse pneumatique de grains individuels selon la revendication 1, le boîtier (1) étant formé par une partie (1S) stationnaire de boîtier et un couvercle (1D) amovible, l'assiette rotative (6) étant logée au moyen d'un palier dans le couvercle (1D), l'arbre d'entraînement (9, 9') étant logé au moyen d'un palier dans la partie (1S) stationnaire de boîtier et l'arbre d'entraînement (9, 9') étant guidé à travers le disque perforé (7) et le disque perforé (7) pouvant ainsi être entraîné.

3. Semeuse pneumatique de grains individuels selon au moins l'une des revendications précédentes, le tambour creux pouvant être séparé par retrait du couvercle (1D).

4. Semeuse pneumatique de grains individuels selon au moins l'une des revendications précédentes, le joint d'étanchéité (10) étant disposé au niveau de l'assiette rotative (6) et le joint d'étanchéité (10) formant un accouplement par friction entre l'assiette rotative (6) et le disque perforé (7).

5. Semeuse pneumatique de grains individuels selon au moins l'une des revendications précédentes, le joint d'étanchéité (10) étant conçu pour fermer, dans la direction axiale du tambour creux, une distance entre l'assiette rotative (6) et le disque perforé (7).

6. Semeuse pneumatique de grains individuels selon au moins l'une des revendications précédentes, le boîtier (1) comprenant un entraînement qui est conçu pour entraîner l'arbre d'entraînement (9, 9'), l'entraînement (2, 13) étant réalisé de manière électrique ou mécanique et l'entraînement électrique (13) et l'entraînement mécanique (2) pouvant être remplacés l'un par l'autre.

7. Semeuse pneumatique de grains individuels selon au moins l'une des revendications précédentes, l'élément (11) de recouvrement de trous roulant autour de son propre axe central, de manière rotative, sur les perforations (7A) du disque perforé (7), l'élément (11) de recouvrement de trous étant porté en un emplacement fixe de manière rotative par un bras support (12) relié de manière rigide au couvercle (1D) et l'axe central de l'élément (11) de recouvrement de trous formant un angle de plus de 5 degrés avec le disque perforé (7).
